# EUROPEAN PATENT SPECIFICATION

(11) **EP 2 496 044 B1**
(45) Date of publication and mention of the grant of the patent: **09.08.2017**
(21) Application number: 10788902.4
(22) Date of filing: 11.06.2010
(51) Int. Cl.: H04N 21/2743, H04N 21/414, H04N 21/4788, H04W 80/00, H04W 88/00, H04N 7/14

(54) **METHOD AND SYSTEM FOR SHARING VIDEOS AMONG MOBILE TERMINALS**
VERFAHREN UND SYSTEM ZUR GEMEINSAMEN NUTZUNG VON VIDEOS UNTER MOBILEN ENDGERÄTEN
PROCÉDÉ ET SYSTÈME DE PARTAGE DE VIDÉOS ENTRE DES TERMINAUX MOBILES

(30) Priority: 30.10.2009 CN 200910236997
(43) Date of publication of application: 05.09.2012
(73) Proprietor: ZTE Corporation, Shenzhen, Guangdong 518057 (CN)
(72) Inventor: CHEN, Xi, Shenzhen Guangdong518057 (CN); TIAN, Guanwei, Shenzhen Guangdong 518057 (CN); LI, Yabin, Shenzhen Guangdong 518057 (CN); HE, Xiaohua, Shenzhen Guangdong 518057 (CN); WANG, Chengcan, Shenzhen Guangdong 518057 (CN)
(74) Representative: Novagraaf Technologies
(86) International application number: PCT/CN2010/073837
(87) International publication number: WO 2010/145506

(56) References cited:
- WO-A1-02/11398
- WO-A1-2007/148162
- WO-A1-2008/102223
- WO-A1-2009/114482
- WO-A2-02/057971
- CN-A- 101 163 087
- CN-A- 101 562 790
- CN-A- 101 707 686
- US-A1- 2003 056 220
- US-A1- 2007 285 499

## Description

### Field of the Invention

The present invention relates to a video sharing technology in a mobile network, and in particular to a method and a system for sharing a video among mobile terminals.

### Background of the Invention

Along with popularization of the Third Generation (3G) mobile network, higher requirements on entertainment of the network are put forward by users. In recent years, the Internet is popular with video uploading and sharing which have gradually found a way into life of everyone. A service amount and a user amount of video website, such as overseas YouTube, domestic Tudou website, increase rapidly. A video shooting function of a mobile terminal has also been popularized substantially and becomes the most convenient and quickest way of the video shooting. Consequently, a video sharing service among mobile terminals owns a great market potential.

At present, the video sharing in a non-mobile network is generally realized in the following ways: uploading a video file to a server and watching the video file by logging in the website using a browser; or providing a media address by the opposite party and watching the video by visiting the media address through a media player. Substantially, in the two ways, the video can be watched only when it is downloaded.

At present, the video sharing in a mobile network is mainly performed in the way of establishing a video session between a calling terminal and a called terminal, or utilizing a video conference or other ways. The sharing procedure can be completed only when the calling terminal and the called terminal are participated at the same time. Moreover, the video playing is one-off, if a user needs to share the video with a plurality of other users, it is required to call each user to perform video sharing with each user respectively so as to realize the sharing procedure. As a result, such video sharing process is wasted in time and labour, in addition, it is unfriendly and will cause influence to the user experience.

Document WO 02/11398 provides a method for forming a multimedia streaming session. However, the above mentioned problem still remains unsolved.

### Summary of the Invention

In view of the above, the present invention provides a method and a system for sharing a video among mobile terminals to solve the problem that the existing video sharing among mobile terminals through a mobile network is wasted in time and labour. The present invention is defined by the appended claims. The technical solution of the present invention is realized as follows.

Through the solution of sharing a video among mobile terminals in the present invention, the calling terminal uploads a shared video to the media server, the called terminal establishes a video link with the media server through the mobile network, and completes the sharing of the video file via a way of receiving a video stream. There is no need to establish a video session between the called and calling terminals. One same video can be shared by a plurality of called terminals at the same time; and a called terminal can watch the same shared video multiple times, therefore, not only the time and labour are saved, but also the user experience is enhanced. Moreover, the uploading of the video is realized through the mobile network, which makes the uploading of the video more quickly and conveniently; the playing of the video sharing is realized through the mobile network, stream media is played directly without any browser, control installation and downloading, the playing is smoother, and the problems of video buffering and video stagnating etc. in the process of video sharing are solved.

### Brief Description of the Drawings

Fig. 1 shows a flowchart of a method for sharing a video among mobile terminals in accordance with an embodiment of the present invention;
Fig. 2 shows a flowchart of a method for uploading a video by a calling terminal in accordance with an embodiment of the present invention;
Fig. 3 shows a flowchart of another method for uploading a video by a calling terminal in accordance with an embodiment of the present invention;
Fig. 4 shows a flowchart of a method for sharing a video by a called terminal in accordance with an embodiment of the present invention;
Fig. 5 shows a signaling flowchart of sharing a video by a called terminal in accordance with an embodiment of the present invention; and
Fig. 6 shows a structure block diagram of a system for sharing a video among mobile terminals in accordance with an embodiment of the present invention.

### Detailed Description of the Embodiments

The technical solution of the present invention is described hereinafter in detail with reference to accompanying drawings and embodiments.

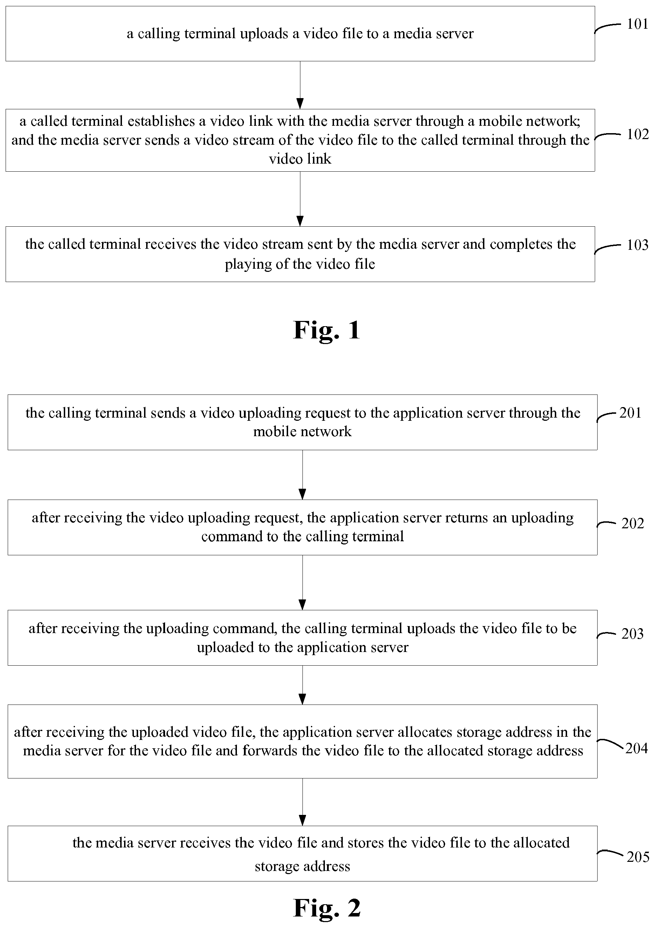

An embodiment of the present invention provides a method for sharing a video among mobile terminals. Referring to Fig. 1, the method mainly comprises the steps as follows.

Step 101, a calling terminal uploads a video file to a media server.

Step 102, a called terminal establishes a video link with the media server through a mobile network; and the media server sends a video stream of the video file to the called terminal through the video link.

Step 103, the called terminal receives the video stream sent by the media server and completes the playing of the video file.

Referring to Fig. 2, the procedure that the calling terminal uploads the video file to the media server in the Step 101 can be realized in the way as follows.

Step 201, the calling terminal sends a video uploading request to an application server through the mobile network.

Step 202, after receiving the video uploading request, the application server returns an uploading command to the calling terminal.

Step 203, after receiving the uploading command, the calling terminal uploads the video file to be uploaded to the application server, wherein the calling terminal can upload the video file via HTTP, FTP or other ways.

Step 204, after receiving the uploaded video file, the application server allocates a storage address in the media server for the video file and forwards the video file to the allocated storage address.

Step 205, the media server receives the video file forwarded by the application server and stores the video file to the allocated storage address.

During the procedure that the calling terminal uploads the video file to the media server, it can further comprise: after the video uploading request is received, the application server generates a video code for identifying the uploaded video file, stores the generated video code and the storage address allocated for the video file in correspondence, and then returns the video code to the calling terminal; and the calling terminal receives and stores the video code.

The video code is one identifier of the uploaded video file, and each video code corresponds to one uploaded video file.

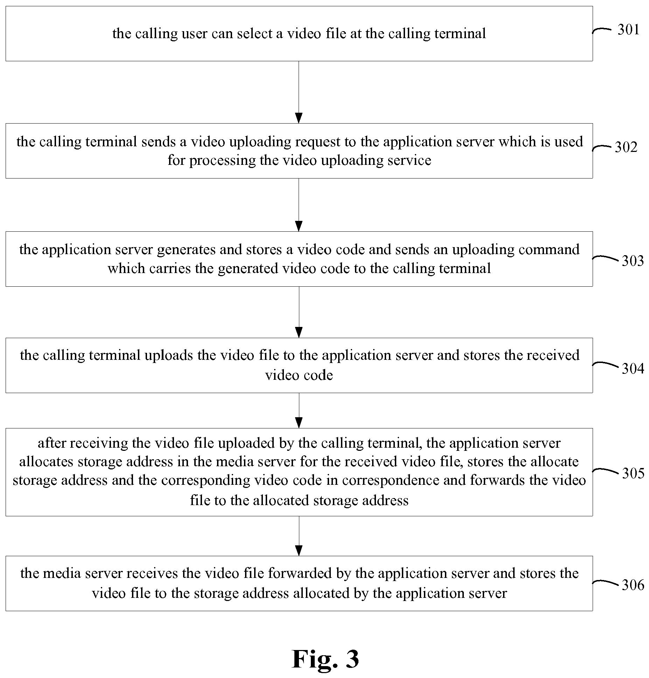

For example, referring to Fig. 3, a user can realize the uploading process of the video file through the following steps.

Step 301, a calling user can select a video file at a calling terminal and click the uploading.

Step 302, the calling terminal sends a video uploading request to an application server which is used for processing a video uploading service.

Step 303, after receiving the video uploading request, the application server generates and stores a video code and sends an uploading command to the calling terminal, wherein the uploading command carries the generated video code.

Step 304, after receiving the uploading command sent by the application server, the calling terminal uploads the video file to the application server and stores the received video code.

Step 305, after receiving the video file uploaded by the calling terminal, the application server allocates a storage address in the media server for the received video file, stores the allocate storage address and the corresponding video code in correspondence and forwards the video file to the allocated storage address.

Step 306, the media server receives the video file forwarded by the application server and stores the video file to the storage address allocated by the application server.

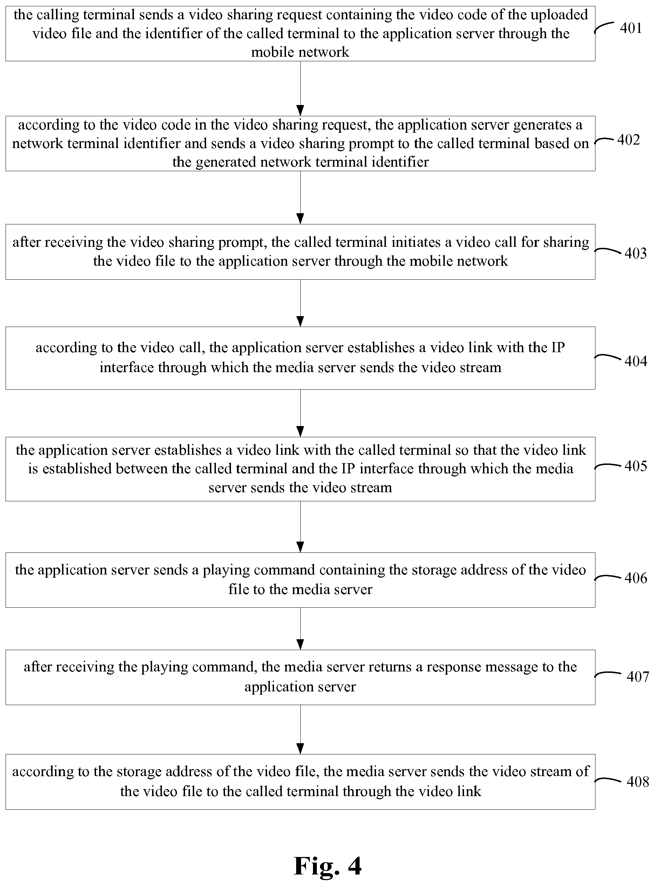

Referring to Fig. 4, after the calling terminal uploads the video file to the media server and before the called terminal establishes a video link with the media server through the mobile network, the method further comprises steps as follows.

Step 401, the calling terminal sends a video sharing request to the application server through the mobile network, wherein the video sharing request comprises the video code of the uploaded video file and an identifier of the called terminal.

The identifier of the called terminal can be a number used by the called terminal in the mobile network, such as a mobile phone number.

Step 402, according to the video code in the video sharing request, the application server generates a network terminal identifier and sends a video sharing prompt to the called terminal based on the generated network terminal identifier to inform the called terminal to share the video file, wherein the network terminal identifier is used for identifying the application server itself and comprises the video code and a video access code for triggering a video sharing service.

The network terminal identifier can be a temporary number which is formed by adding the video code and the video access code. For example, if a video serial number corresponding to a video file is 0000000001 and the video access number for triggering the video sharing service in the mobile network is 12599, the network terminal identifier generated at this moment is a temporary number 125990000000001.

The video sharing prompt can be a short message prompt sent by the application server based on the network terminal identifier. For example, when the network terminal identifier is the temporary number 125990000000001, the application server can sent a short message, which having a content of "a friend shares a section of video with you, please recall this number if you want to watch", as the video sharing prompt for informing the called user to the called terminal through this number, so that the called user can initiate a video call for sharing the video file having the video serial number of 0000000001 to the application server by recalling the temporary number 125990000000001.

Referring to Fig. 4, the procedure that the called terminal establishes a video link with the media server through the mobile network in the Step 102 may further comprise the steps as follows.

Step 403, after receiving the video sharing prompt, the called terminal initiates a video call for sharing the video file to the application server through the mobile network.

Step 404, according to the video call, the application server sends a sending request for a video stream to the media server; after receiving the sending request of the video stream, the media server returns an IP address, through which the media server sends the video stream, to the application server; the application server establishes a video link with an IP interface, through which the media server sends the video stream, according to the IP address returned by the media server.

Step 405, the application server sends the IP address, through which the media server sends the media stream, to the called terminal through the mobile network and establishes a video link with the called terminal, so that a video link is established between the called terminal and the IP interface through which the media server sends the video stream, to complete establishment of the video link between the called terminal and the media server.

The called terminal can establish a video link based on a call control protocol (H.245 protocol) with the media server through the mobile network. Before establishing the call, the H.245 protocol is used for solving calling medium problem and establishing media stream.

Referring to Fig. 4, the procedure that the media server sends the video stream of the video file to the called terminal through the video link in the Step 102 can specifically comprise the steps as follows.

Step 406, after a video link between the called terminal and the IP interface through which the media server sends the video stream is established, the application server sends a playing command containing the storage address of the video file to the media server.

Step 407, after receiving the playing command, the media server returns a response message to the application server.

Step 408, according to the storage address of the video file, the media server sends the video stream of the video file to the called terminal through the video link.

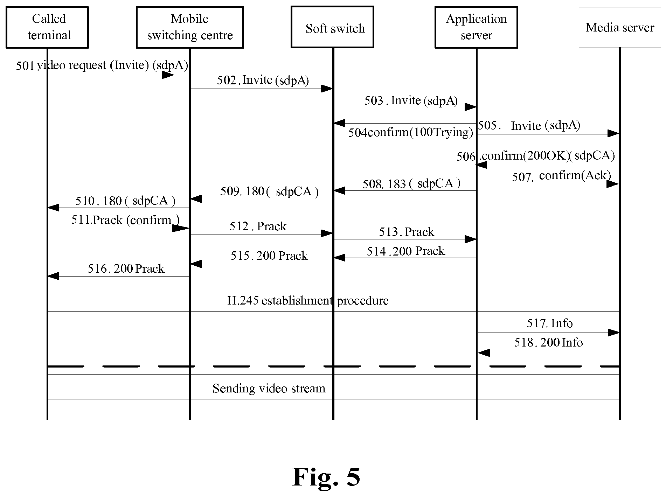

The specific procedure of sharing a video by a called terminal is introduced in detail by taking the signaling flowchart for sharing the video by the called terminal as shown in Fig.5 as an example, and the specific procedure is as follows.

Steps 501-502, the called terminal sends a video request (Invite) of a video call, wherein Invite carries sdpA message; and a mobile switching centre in a mobile network sends the Invite to a soft switch in the mobile network.

In the above, the sdpA message contains a video code of a video file which is requested to be shared and a video access code for triggering a video sharing service, the two contents can be the network terminal identifier mentioned above.

Steps 503-504, the soft switch sends, to the application server, the video request (Invite) of the video call which carries the sdpA message according to the network terminal identifier included in the sdpA message; and the application server returns a 100Trying message and the triggering of the video sharing service is completed.

Steps 505-507, according to the video request (Invite) of the video call sent by the soft switch, the application server sends, to the media server, a video request (Invite) for sending a video stream; the media server returns a 200 OK confirm message; the application server sends an Ack confirm message to the media server; and the video link between the application server and the media server is completed.

In the Invite sent from the application server to the media server, the sdpA is also carried. The sdpA message here can include information such as a storage address of the video file so that the media server can confirm that the video file is stored therein. The application server can determine the storage address corresponding to the video code according to a stored corresponding relationship between the video code and the storage address allocated for the video file.

The 200OK confirm message carries an sdpCA message, which is a Session Description Protocol (SDP) message in a Signaling Control Protocol (SIP) signaling of an application layer, contains information such as IP address through which the media server sends a media stream.

Steps 508-510, the application server sends a 183 message to the soft switch, wherein the 183 message carries the sdpCA message which contains the information such as IP address through which the media server sends the media stream; the soft switch sends the sdpCA message to the mobile switching centre by using a 180 message; and the mobile switching centre forwards the 180 message to the called terminal.

Steps 511-513, the called terminal sends a reply confirm (Prack) message to the mobile switching centre; the mobile switching centre sends a Prack message to the software switch; and the soft switch sends a Prack message to the application server.

Steps 514-516, the application server sends a reply confirm (200Prack) message to the soft switch; the soft switch sends a reply confirm (200Prack) message to the mobile switching centre; and the mobile switching centre sends a reply confirm (200Prack) message to the called terminal, the establishment of the video link based on the H.245 between the called terminal and the IP interface through which the media server sends the video stream is completed.

Steps 517-518, the application server sends an Info message which represents a displaying command to the media server, wherein the Info message contains the storage address of the video file in the media server; the media server receives the Info message, after returning a response message of 200Info to the application server, the media server sends the video stream to the called terminal through the established video link; the called terminal receives the video stream and plays the video file, and the called user can start watching the video.

The above soft switch can be a core network assembly positioned at a network control layer and used for completing services such as calling control, routing, authorization, resource management and etc.

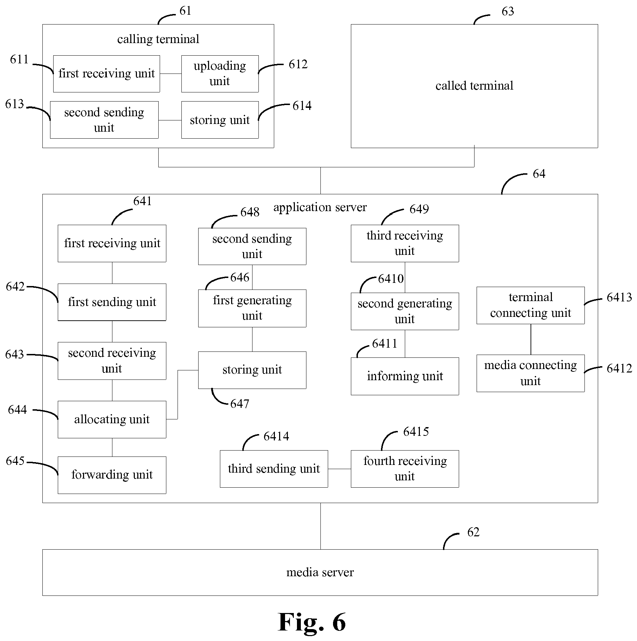

In addition, an embodiment of the present invention further provides a system for sharing a video among mobile terminals. Referring to Fig. 6, the system mainly comprises the follows:
a calling terminal 61 for uploading a video file;
a media server 62 for receiving the video file uploaded by the calling terminal 61 and sending a video stream of the video file; further for sending the video stream of the video file to a called terminal 63 through an established video link;
a called terminal 63 for receiving the video stream sent by the media server 62 and completing the playing of the video file; and for establishing the video link with the media server 62 through the mobile network.

In the above, the called terminal 63 establishes the video link with the media server 62 through the mobile network; and the media server 62 sends the video stream of the video file to the called terminal 63 through the video link.

The system may further comprise an application server 64 for processing a video uploading service; and the application server 64 comprises:
a first receiving unit 641 for receiving a video uploading request sent by the calling terminal 61;
a first sending unit 642 for returning an uploading command to the calling terminal 61;
a second receiving unit 643 for receiving the video file uploaded by the calling terminal 61;
an allocating unit 644 for allocating a storage address for the video file received by the second receiving unit 643 in the media server 62; and
a forwarding unit 645 for forwarding the video file to the storage address allocated by the allocating unit 644.

The calling terminal 61 comprises:
a first sending unit 611 for sending the video uploading request to the application server 64; and
an uploading unit 612 for uploading the video file to be uploaded to the application server 64.

The media server 62 is used for receiving the video file forwarded by the forwarding unit 645 of the application server 64 and storing the video file to the storage address allocated by the allocating unit 644.

The application server 64 further comprises:
a first generating unit 646 for generating a video code for identifying the uploaded video file;
a storing unit 647 for storing the video code generated by the first generating unit 646 and the storage address allocated by the allocating unit 644 in correspondence;
a second sending unit 648 for returning the video code generated by the first generating unit 646 to the calling terminal 61;
a third receiving unit 649 for receiving the video sharing request, which comprises the video code of the uploaded video file and an identifier of the called terminal 63, sent by the calling terminal 61 through the mobile network;
a second generating unit 6410 for generating a network terminal identifier according to the video sharing request received by the third receiving unit 649, wherein the network terminal identifier is used for identifying the application server 64 itself and comprises the video code in the video sharing request and a video access code for triggering a video sharing service; and
an informing unit 6411 for sending a video sharing prompt to the called terminal 63 based on the network terminal identifier generated by the second generating unit 6410 to inform the called terminal 63 to share the video file.

The calling terminal 61 further comprises: a storing unit 613 for receiving and storing the video code sent by the second sending unit 648 of the application server 64; and a second sending unit 614 for sending the video sharing request, which comprises the video code of the uploaded video file and the identifier of the called terminal 63, to the third receiving unit 649 of the application server 64.

The application server 64 is further used for processing a video sharing service; and the application server 64 further comprises:
a media connecting unit 6412 for, after sending a sending request of the video stream to the media server 62, receiving an IP address, through which the media server 62 sends the media stream, returned by the media server 62 and establishing a video link with an IP interface, through which the media server 62 sends the video stream, according to the IP address returned by the media server 62; and
a terminal connecting unit 6413 for sending the IP address, through which the media server 62 sends the video stream, to the called terminal 63 through the mobile network and establishing a video link with the called terminal 63.

The application server 64 further comprises: a third sending unit 6414 for sending a playing command containing the storage address of the video file to the media server 62 and determining the storage address corresponding to the video code according to the corresponding relationship, stored in the storing unit 613, between the video code and the storage address allocated for the video file; and a fourth receiving unit 6415 for receiving the response message returned by the media server 62.

The media server 62 is further used for, when receiving the playing command sent by the third sending unit 6414 of the application server 64, returning the response message to the fourth receiving unit 6415 of the application server 64 and sending the video stream of the video file to the called terminal 63 through the video link between the IP interface through which the media server 62 sends the video stream and the called terminal 63 according to the storage address of the video file.

In implementation, a plurality of called terminals can respectively establish respective video link with the media server so that the plurality of called terminals can share the video at the same time.

By adopting the system for sharing the video among the mobile terminals, through the mobile network, the terminal user can shoot a video at any time, upload a video at any time and watch a video at any time without browser, play controls, downloading and trouble of video buffering and time delay; and the video playing is smoother. A video sharing service with more entertainment and interactivity is provided for mobile network users.

## Claims

1. A method for sharing a video among mobile terminals, comprising the steps of:
• uploading (101) a video file by a calling terminal to a media server; said uploading step comprising the sub-steps of:
∘ sending (201;302) by the calling terminal a video uploading request to an application server through the mobile network;
∘ after reception of the video uploading request, generating (303) by the application server a video code for identifying the video file to be uploaded;
∘ returning (202;303) by the application server an uploading command to the calling terminal, said command carrying the generated video code;
∘ after reception of the uploading command at the calling terminal, storing the video code at the calling terminal and uploading (204;305) by the calling terminal the video file to be uploaded to the application server;
∘ after reception of the uploaded video file at the application server, allocating (204;305) by the application server a storage address in a media server for the video file;
∘ storing by the application server the generated video code and the storage address allocated for the video file in correspondence;
∘ forwarding (204;305) by the application server the video file to the allocated storage address; and
∘ receiving (205;306) by the media server the video file forwarded by the application server and storing the video file to the allocated storage address in the media server;
• sending (401) by the calling terminal a video sharing request to the application server through the mobile network, said video sharing request comprising the video code of the uploaded video file and an identifier of the called terminal;
• generating (402) by the application server a generated network terminal identifier used for identifying the application server itself, said network terminal identifier being a temporary number comprising the video code in the video sharing request, and a video access code which is used for triggering a video sharing service;
• sending (402) by the application server a video sharing prompt to the called terminal, said video sharing prompt being a short message prompt carrying the generated network terminal identifier to inform the called terminal that a video call may be initiated by calling said generated network terminal identifier, so as to access said video file;
• initiating a video call by the called terminal, thereby establishing (102) a video link with the media server through the mobile network,
sending by the media server a video stream of the video file to the called terminal through the established video link; and
receiving (103) by the called terminal the video stream sent by the media server and completing playing by the called terminal of the video file.

2. The method for sharing a video among mobile terminals according to claim 1, **characterized in that** the step of the called terminal initiating a video call, thereby establishing (102) the video link with the media server through the mobile network comprises the sub-steps of:
sending (505) by the application server a sending request of the video stream to the media server according to the video call;
after receiving the sending request of the video stream by the media server, the media server returning (506) an IP address, through which the media server sends the video stream, to the application server;
establishing (404) by the application server a video link with an IP interface, through which the media server sends the video stream, according to the IP address returned by the media server; and
sending (508,509,510) by the application server the IP address, through which the media server sends the media stream, to the called terminal through the mobile network, and establishing (405) a video link with the called terminal so that a video link is established between the called terminal and the IP interface through which the media server sends the video stream, to complete establishment of the video link between the called terminal and the media server.

3. The method for sharing a video among mobile terminals according to claim 2, **characterized in that** the step of the media server sending the video stream of the video file to the called terminal through the video link comprises the sub-steps of:
after the video link is established (405) between the called terminal and the IP interface through which the media server sends the video stream, the application server sending (406;517) a playing command to the media server, wherein the playing command comprises the storage address of the video file;
after receiving the playing command, the media server returning (407;518) a response message to the application server; and
the media server sending (408) the video stream of the video file to the called terminal through the video link according to the storage address of the video file.

4. A system for sharing a video among mobile terminals, comprising:
• a calling terminal (61) for uploading a video file;
• a media server (62) for receiving the video file uploaded by the calling terminal (61) and sending a video stream of the video file; further for sending the video stream of the video file to a called terminal (63) through an established video link;
• a called terminal (63) for receiving the video stream sent by the media server (62) and completing playing of the video file; and for establishing the video link with the media server (62) through a mobile network; and
• an application server (64) for processing a video uploading service, the application server (64) comprising:
∘ a first receiving unit (641) for receiving a video uploading request sent by the calling terminal (61) through the mobile network;
∘ a first generating unit (646) for generating a video code for identifying the uploaded video file;
∘ a first sending unit (642) for returning an uploading command to the calling terminal (61), said command carrying the generated video code;
∘ a second receiving unit (643)for receiving the video file uploaded by the calling terminal (61);
∘ an allocating unit (644) for allocating a storage address in the media server (62) for the video file received by the second receiving unit (643);
∘ a storing unit (647) for storing the video code generated by the first generating unit (646) and the storage address allocated for the video file by the allocating unit (644) in correspondence;
∘ a forwarding unit (645) for forwarding the video file received by the second receiving unit (643) to the storage address allocated by the allocating unit (644);
∘ a third receiving unit (649) for receiving a video sharing request sent by the calling terminal (61) through the mobile network, said video sharing request comprising the video code of the uploaded video file and an identifier of the called terminal; and
∘ a second generating unit (6410) for generating a network terminal identifier used for identifying the application server itself, said network terminal identifier being a temporary number comprising the video code in the video sharing request, and a video access code which is used for triggering a video sharing service;
∘ an informing unit (6411) for sending a video sharing prompt to the called terminal (63), said video sharing prompt being a short message prompt carrying the generated network terminal identifier to inform the called terminal that a video call may be initiated by calling said generated network terminal identifier, so as to access said video file;
• the calling terminal (61) comprising:
∘ a first sending unit (611) for sending the video uploading request to the application server (64);
∘ an uploading unit (612) for uploading the video file to be uploaded to the application server (64);
∘ a second storing unit (613) for receiving and storing the video code sent by the second sending unit (648) of the application server (64); and
∘ a second sending unit (614) for sending the video sharing request to the application server (64) through the mobile network;
• the media server (62) being used for receiving the video file forwarded by the application server (64), storing the video file to the storage address, and sending a video stream of the video file to the called terminal through the established video link.

5. The system for sharing a video among mobile terminals according to claim 4, **characterized in that**
the application server (64) is further used for processing the video sharing service, the application server (64) further comprising: a media connecting unit (6412) for, after sending a sending request of the video stream to the media server (62), receiving an IP address, through which the media server (62) sends the media stream, returned by the media server (62), and establishing a video link with an IP interface, through which the media server (62) sends the video stream, according to the IP address returned by the media server (62); and
a terminal connecting unit (6413) for sending the IP address returned by the media server (62), through which the media server (62) sends the video stream, to the called terminal (63) through the mobile network, and establishing a video link with the called terminal (63).

6. The system for sharing a video among mobile terminals according to claim 5, **characterized in that**
the application server (64) further comprises: a third sending unit (6414) for sending a playing command to the media server (62), wherein the playing command comprises the storage address of the video file; and a fourth receiving unit (6415) for receiving a response message returned by the media server (62);
the media server (62) is further used for, when receiving the playing command sent by the application server (64), returning the response message to the application server (64) and sending the video stream of the video file to the called terminal (63) through the video link between the called terminal (63) and the IP interface, through which the media server (62) sends the video stream, according to the storage address of the video file.

## Patentansprüche

1. Verfahren zum Freigeben eines Videos zwischen mobilen Endgeräten, umfassend die Schritte des:
- Hochladens (101) einer Videodatei durch ein anrufendes Endgerät auf einen Medienserver; wobei der Hochlade-Schritt die Teilschritte umfasst des:
- Sendens (201; 302), durch das anrufende Endgerät, einer Video-Hochladeanfrage an einen Anwendungsserver über das Mobilnetz;
- nach Empfang der Video-Hochladeanfrage Erzeugens (303), durch den Anwendungsserver, eines Videocodes zum Identifizieren der hochzuladenden Videodatei;
- Zurückgebens (202; 303), durch den Anwendungsserver, eines Hochladebefehls an das anrufende Endgerät, wobei der Befehl den erzeugten Videocode überträgt;
- nach Empfang des Hochladebefehls auf dem anrufenden Endgerät, Speicherns des Videocodes auf dem anrufenden Endgerät und Hochladens (204; 305) der hochzuladenden Videodatei durch das anrufende Endgerät auf den Anwendungsserver;
- nach Empfang der hochgeladenen Videodatei auf dem Anwendungsserver, Zuweisens (204; 305), durch den Anwendungsserver, einer Speicheradresse für die Videodatei in einem Medienserver;
- Speichers, durch den Anwendungsserver, des erzeugten Videocodes und der für die Videodatei zugewiesenen Speicheradresse in Zusammenhang;
- Weiterleitens (204; 305), durch den Anwendungsserver, der Videodatei an die zugewiesene Speicheradresse; und
- Empfangens (205; 306), durch den Medienserver, der durch den Anwendungsserver weitergeleiteten Videodatei und Speicherns der Videodatei an der zugewiesenen Speicheradresse in dem Medienserver;
- Sendens (401), durch das anrufende Endgerät, einer Video-Freigabeanfrage über das Mobilnetz an den Anwendungsserver, wobei die Video-Freigabeanfrage den Videocode der hochgeladenen Videodatei und eine Identifizierung des angerufenen Endgerätes umfasst;
- Erzeugens (402), durch den Anwendungsserver, einer erzeugten Netzendgerät-Identifizierung, die zum Identifizieren des Anwendungsservers selbst verwendet wird, wobei die Netzendgerät-Identifizierung eine temporäre Nummer ist, die den Videocode in der Video-Freigabeanfrage und einen Video-Zugriffscode umfasst, der zum Auslösen eines Video-Freigabedienstes verwendet wird;
- Sendens (402), durch den Anwendungsserver, einer Video-Freigabeaufforderung an das angerufene Endgerät, wobei die Video-Freigabeaufforderung eine Kurznachrichtenaufforderung ist, die die erzeugte Netzendgerät-Identifizierung überträgt, um das angerufene Endgerät zu informieren, dass ein Videoanruf initiiert werden kann durch Anrufen der erzeugten Netzendgerät-Identifizierung, um auf die Videodatei zuzugreifen;
- Initiierens eines Videoanrufs durch das angerufene Endgerät, dadurch Herstellens (102) eines Videolinks zu dem Medienserver über das Mobilnetz,
Sendens, durch den Medienserver, eines Videostreams der Videodatei über den hergestellten Videolink an das angerufene Endgerät; und
Empfangens (103), durch das angerufene Endgerät, des durch den Medienserver gesendeten Videostreams und Vollendens des Abspielens der Videodatei durch das angerufene Endgerät.

2. Verfahren zum Freigeben eines Videos zwischen mobilen Endgeräten nach Anspruch 1, **dadurch gekennzeichnet, dass** der Schritt des angerufenen Endgerätes des Initiierens eines Videoanrufs, dadurch Herstellens (102) des Videolinks zu dem Medienserver über das Mobilnetz, die Teilschritte umfasst des:
Sendens (505), durch den Anwendungsserver, einer Sendeanfrage des Videostreams an den Medienserver gemäß dem Videoanruf;
nach Empfangen der Sendeanfrage des Videostreams durch den Medienserver, Zurückgebens (506) einer IP-Adresse, über die der Medienserver den Videostream sendet, durch den Medienserver an den Anwendungsserver;
Herstellens (404), durch den Anwendungsserver, eines Videolinks zu einer IP-Schnittstelle, über die der Medienserver den Videostream sendet, gemäß der durch den Medienserver zurückgegebenen IP-Adresse; und
Sendens (508, 509, 510), durch den Anwendungsserver, der IP-Adresse, über die der Medienserver den Medienstream sendet, über das Mobilnetz an das angerufene Endgerät, und Herstellens (405) eines Videolinks zu dem angerufenen Endgerät, sodass ein Videolink zwischen dem angerufenen Endgerät und der IP-Schnittstelle, über die der Medienserver den Videostream sendet, hergestellt wird, um das Herstellen des Videolinks zwischen dem angerufenen Endgerät und dem Medienserver zu vollenden.

3. Verfahren zum Freigeben eines Videos zwischen mobilen Endgeräten nach Anspruch 2, **dadurch gekennzeichnet, dass** der Schritt des Medienservers des Sendens des Videostreams der Videodatei über den Videolink an das angerufene Endgerät die Teilschritte umfasst des:
nachdem der Videolink zwischen dem angerufenen Endgerät und der IP-Schnittstelle, über die der Medienserver den Videostream sendet, hergestellt (405) ist, Sendens (406; 517), durch den Anwendungsserver, eines Abspielbefehls an den Medienserver, wobei der Abspielbefehl die Speicheradresse der Videodatei umfasst;
nach Empfangen des Abspielbefehls, Zurückgebens (407; 518), durch den Medienserver, einer Antwortnachricht an den Anwendungsserver; und
Sendens (408), durch den Medienserver, des Videostreams der Videodatei gemäß der Speicheradresse der Videodatei über den Videolink an das angerufene Endgerät.

4. System zum Freigeben eines Videos zwischen mobilen Endgeräten, umfassend:
- ein anrufendes Endgerät (61) zum Hochladen einer Videodatei;
- einen Medienserver (62) zum Empfangen der durch das anrufende Endgerät (61) hochgeladenen Videodatei und Senden eines Videostreams der Videodatei; weiter zum Senden des Videostreams der Videodatei über einen hergestellten Videolink an ein angerufenes Endgerät (63);
- ein angerufenes Endgerät (63) zum Empfangen des durch den Medienserver (62) gesendeten Videostreams und Vollenden des Abspielens der Videodatei; und zum Herstellen des Videolinks zu dem Medienserver (62) über ein Mobilnetz; und
- einen Anwendungsserver (64) zum Verarbeiten eines Video-Hochladedienstes, wobei der Anwendungsserver (64) umfasst:
- eine erste Empfangseinheit (641) zum Empfangen einer Video-Hochladeanfrage, die durch das anrufende Endgerät (61) über das Mobilnetz gesendet wird;
- eine erste Erzeugungseinheit (646) zum Erzeugen eines Videocodes zum Identifizieren der hochgeladenen Videodatei;
- eine erste Sendeeinheit (642) zum Zurückgeben eines Hochladebefehls an das anrufende Endgerät (61), wobei der Befehl den erzeugten Videocode überträgt;
- eine zweite Empfangseinheit (643) zum Empfangen der durch das anrufende Endgerät (61) hochgeladenen Videodatei;
- eine Zuweisungseinheit (644) zum Zuweisen einer Speicheradresse im Medienserver (62) für die durch die zweite Empfangseinheit (643) empfangene Videodatei;
- eine Speichereinheit (647) zum Speichern des durch die erste Erzeugungseinheit (646) erzeugten Videocodes und der durch die Zuweisungseinheit (644) für die Videodatei zugeordneten Speicheradresse in Zusammenhang;
- eine Weiterleitungseinheit (645) zum Weiterleiten der durch die zweite Empfangseinheit (643) empfangenen Videodatei an die durch die Zuweisungseinheit (644) zugewiesene Speicheradresse;
- eine dritte Empfangseinheit (649) zum Empfangen einer durch das anrufende Endgerät (61) über das Mobilnetz gesendeten Video-Freigabeanfrage, wobei die Video-Freigabeanfrage den Videocode der hochgeladenen Videodatei und eine Identifizierung des angerufenen Endgerätes umfasst; und
- eine zweite Erzeugungseinheit (6410) zum Erzeugen einer Netzendgerät-Identifizierung, die zum Identifizieren des Anwendungsservers selbst verwendet wird, wobei die Netzendgerät-Identifizierung eine temporäre Nummer ist, die den Videocode in der Video-Freigabeanfrage und einen Video-Zugriffscode umfasst, der zum Auslösen eines Video-Freigabedienstes verwendet wird;
- eine Informationseinheit (6411) zum Senden einer Video-Freigabeaufforderung an das angerufene Endgerät (63), wobei die Video-Freigabeaufforderung eine Kurznachrichtenaufforderung ist, die die erzeugte Netzendgerät-Identifizierung überträgt, um das angerufene Endgerät zu informieren, dass ein Videoanruf initiiert werden kann durch Anrufen der erzeugten Netzendgerät-Identifizierung, um auf die Videodatei zuzugreifen;
- wobei das anrufende Endgerät (61) umfasst:
- eine erste Sendeeinheit (611) zum Senden der Video-Hochladeanfrage an den Anwendungsserver (64);
- eine Hochladeeinheit (612) zum Hochladen der hochzuladenden Videodatei auf den Anwendungsserver (64);
- eine zweite Speichereinheit (613) zum Empfangen und Speichern des durch die zweite Sendeeinheit (648) des Anwendungsservers (64) gesendeten Videocodes; und
- eine zweite Sendeeinheit (614) zum Senden der Video-Freigabeanfrage über das Mobilnetz an den Anwendungsserver (64);
- wobei der Medienserver (62) zum Empfangen der durch den Anwendungsserver (64) weitergeleiteten Videodatei, Speichern der Videodatei an der Speicheradresse, und Senden eines Videostreams der Videodatei über den hergestellten Videolink an das angerufene Endgerät verwendet wird.

5. System zum Freigeben eines Videos zwischen mobilen Endgeräten nach Anspruch 4, **dadurch gekennzeichnet, dass**
der Anwendungsserver (64) weiter zum Verarbeiten des Video-Freigabedienstes verwendet wird, wobei der Anwendungsserver (64) weiter umfasst: eine Medien-Verbindungseinheit (6412) zum Empfangen, nach Senden einer Sendeanfrage des Videostreams an den Medienserver (62), einer durch den Medienserver (62) zurückgegebenen IP-Adresse, über die der Medienserver (62) den Medienstream sendet, und Herstellen eines Videolinks zu einer IP-Schnittstelle, über die der Medienserver (62) den Videostream sendet, gemäß der durch den Medienserver (62) zurückgegebenen IP-Adresse; und
eine Endgeräte-Verbindungseinheit (6413) zum Senden der durch den Medienserver (62) zurückgegebenen IP-Adresse, über die der Medienserver (62) den Videostream sendet, über das Mobilnetz an das angerufene Endgerät (63) und Herstellen eines Videolinks zu dem angerufenen Endgerät (63).

6. System zum Freigeben eines Videos zwischen mobilen Endgeräten gemäß Anspruch 5, **dadurch gekennzeichnet, dass**
der Anwendungsserver (64) weiter umfasst: eine dritte Sendeeinheit (6414) zum Senden eines Abspielbefehls an den Medienserver (62), wobei der Abspielbefehl die Speicheradresse der Videodatei umfasst; und eine vierte Empfangseinheit (6415) zum Empfangen einer durch den Medienserver (62) zurückgegebenen Antwortnachricht;
wobei der Medienserver (62) weiter verwendet wird zum Zurückgeben, wenn der durch den Anwendungsserver (64) gesendete Abspielbefehl empfangen wird, der Antwortnachricht an den Anwendungsserver (64) und Senden des Videostreams der Videodatei gemäß der Speicheradresse der Videodatei an das angerufene Endgerät (63) über den Videolink zwischen dem angerufenen Endgerät (63) und der IP-Schnittstelle, über die der Medienserver (62) den Videostream sendet.

## Revendications

1. Procédé de partage d'une vidéo entre des terminaux mobiles, comprenant les étapes suivantes :
- le téléchargement (101) d'un fichier vidéo par un terminal appelant à un serveur média ; ladite étape de téléchargement comprenant les sous-étapes suivantes :
- l'envoi (201 ; 302) par le terminal appelant d'une demande de téléchargement de vidéo à un serveur d'application par le biais du réseau mobile ;
- après la réception de la demande de téléchargement de vidéo, la génération (303) par le serveur d'application d'un code vidéo pour identifier le fichier vidéo à télécharger ;
- le renvoi (202 ; 303) par le serveur d'application d'une commande de téléchargement au terminal appelant, ladite commande portant le code vidéo généré ;
- après la réception de la commande de téléchargement au niveau du terminal appelant, le stockage du code vidéo au niveau du terminal appelant et le téléchargement (204 ; 305) par le terminal appelant du fichier vidéo à télécharger au serveur d'application ;
- après la réception du fichier vidéo téléchargé au niveau du serveur d'application, l'attribution (204 ; 305) par le serveur d'application d'une adresse de stockage dans un serveur média pour le fichier vidéo ;
- le stockage par le serveur d'application du code vidéo généré et de l'adresse de stockage attribuée pour le fichier vidéo en correspondance ;
- le transfert (204 ; 305) par le serveur d'application du fichier vidéo à l'adresse de stockage attribuée ; et
- la réception (205 ; 306) par le serveur média du fichier vidéo transféré par le serveur d'application et le stockage du fichier vidéo à l'adresse de stockage attribuée dans le serveur média ;
- l'envoi (401) par le terminal appelant d'une demande de partage de vidéo au serveur d'application par le biais du réseau mobile, ladite demande de partage de vidéo comprenant le code vidéo du fichier vidéo téléchargé et un identificateur du terminal appelé ;
- la génération (402) par le serveur d'application d'un identificateur de terminal de réseau généré utilisé pour identifier le serveur d'application lui-même, ledit identificateur de terminal de réseau étant un nombre temporaire comprenant le code vidéo dans la demande de partage de vidéo et un code d'accès vidéo qui est utilisé pour déclencher un service de partage de vidéo ;
- l'envoi (402) par le serveur d'application d'une invite de partage de vidéo au terminal appelé, ladite invite de partage de vidéo étant une invite de message court portant l'identificateur de terminal de réseau généré pour informer le terminal appelé qu'un appel vidéo peut être lancé en appelant ledit identificateur de terminal de réseau généré, de manière à accéder audit fichier vidéo ;
- le lancement d'un appel vidéo par le terminal appelé, en établissant (102) ainsi une liaison vidéo avec le serveur média par le biais du réseau mobile,
l'envoi par le serveur média d'un flux vidéo du fichier vidéo au terminal appelé par le biais de la liaison vidéo établie ; et
la réception (103) par le terminal appelé du flux vidéo envoyé par le serveur média et
la terminaison de la reproduction par le terminal appelé du fichier vidéo.

2. Procédé de partage d'une vidéo entre des terminaux mobiles selon la revendication 1, **caractérisé en ce que** l'étape du lancement d'un appel vidéo par le terminal appelé, en établissant (102) ainsi la liaison vidéo avec le serveur média par le biais du réseau mobile, comprend les sous-étapes suivantes :
l'envoi (505) par le serveur d'application d'une demande d'envoi du flux vidéo au serveur média en fonction de l'appel vidéo ;
après la réception de la demande d'envoi du flux vidéo par le serveur média, le renvoi (506) par le serveur média d'une adresse IP, par le biais de laquelle le serveur média envoie le flux vidéo, au serveur d'application ;
l'établissement (404) par le serveur d'application d'une liaison vidéo avec une interface IP, par le biais de laquelle le serveur média envoie le flux vidéo, en fonction de l'adresse IP renvoyée par le serveur média ; et
l'envoi (508, 509, 510) par le serveur d'application de l'adresse IP, par le biais de laquelle le serveur média envoie le flux vidéo, au terminal appelé par le biais du réseau mobile, et l'établissement (405) d'une liaison vidéo avec le terminal appelé de manière qu'une liaison vidéo soit établie entre le terminal appelé et l'interface IP par le biais de laquelle le serveur média envoie le flux vidéo, pour terminer l'établissement de la liaison vidéo entre le terminal appelé et le serveur média.

3. Procédé de partage d'une vidéo entre des terminaux mobiles selon la revendication 2, **caractérisé en ce que** l'étape d'envoi par le serveur média du flux vidéo du fichier vidéo au terminal appelé par le biais de la liaison vidéo comprend les sous-étapes suivantes :
après que la liaison vidéo est établie (405) entre le terminal appelé et l'interface IP par le biais de laquelle le serveur média envoie le flux vidéo, l'envoi (406 ; 517) par le serveur d'application d'une commande de reproduction au serveur média, dans lequel la commande de reproduction comprend l'adresse de stockage du fichier vidéo ;
après la réception de la commande de reproduction, le renvoi (407 ; 518) par le serveur média d'un message de réponse au serveur d'application ; et
l'envoi (408) par le serveur média du flux vidéo du fichier vidéo au terminal appelé par le biais de la liaison vidéo en fonction de l'adresse de stockage du fichier vidéo.

4. Système de partage d'une vidéo entre des terminaux mobiles, comprenant :
- un terminal appelant (61) pour télécharger un fichier vidéo ;
- un serveur média (62) pour recevoir le fichier vidéo téléchargé par le terminal appelant (61) et envoyer un flux vidéo du fichier vidéo ; pour envoyer en outre le flux vidéo du fichier vidéo à un terminal appelé (63) par le biais d'une liaison vidéo établie ;
- un terminal appelé (63) pour recevoir le flux vidéo envoyé par le serveur média (62) et terminer la reproduction du fichier vidéo ; et pour établir la liaison vidéo avec le serveur média (62) par le biais d'un réseau mobile ; et
- un serveur d'application (64) pour traiter un service de téléchargement vidéo, le serveur d'application (64) comprenant :
- une première unité de réception (641) pour recevoir une demande de téléchargement de vidéo envoyée par le terminal appelant (61) par le biais du réseau mobile ;
- une première unité de génération (646) pour générer un code vidéo pour identifier le fichier vidéo téléchargé ;
- une première unité d'envoi (642) pour renvoyer une commande de téléchargement au terminal appelant (61), ladite commande portant le code vidéo généré ;
- une deuxième unité de réception (643) pour recevoir le fichier vidéo téléchargé par le terminal appelant (61) ;
- une unité d'attribution (644) pour attribuer une adresse de stockage dans le serveur média (62) pour le fichier vidéo reçu par la deuxième unité de réception (643) ;
- une unité de stockage (647) pour stocker le code vidéo généré par la première unité de génération (646) et l'adresse de stockage attribuée pour le fichier vidéo par l'unité d'attribution (644) en correspondance ;
- une unité de transfert (645) pour transférer le fichier vidéo reçu par la deuxième unité de réception (643) à l'adresse de stockage attribuée par l'unité d'attribution (644) ;
- une troisième unité de réception (649) pour recevoir une demande de partage de vidéo envoyée par le terminal appelant (61) par le biais du réseau mobile, ladite demande de partage de vidéo comprenant le code vidéo du fichier vidéo téléchargé et un identificateur du terminal appelé ; et
- une deuxième unité de génération (6410) pour générer un identificateur de terminal de réseau utilisé pour identifier le serveur d'application lui-même, ledit identificateur de terminal de réseau étant un nombre temporaire comprenant le code vidéo dans la demande de partage de vidéo et un code d'accès vidéo qui est utilisé pour déclencher un service de partage de vidéo ;
- une unité d'information (6411) pour envoyer une invite de partage de vidéo au terminal appelé (63), ladite invite de partage de vidéo étant une invite de message court portant l'identificateur de terminal de réseau généré pour informer le terminal appelé qu'un appel vidéo peut être lancé en appelant ledit identificateur de terminal de réseau généré, de manière à accéder audit fichier vidéo ;
- le terminal appelant (61) comprenant :
- une première unité d'envoi (611) pour envoyer la demande de téléchargement de vidéo au serveur d'application (64) ;
- une unité de téléchargement (612) pour télécharger le fichier vidéo à télécharger au serveur d'application (64) ;
- une deuxième unité de stockage (613) pour recevoir et stocker le code vidéo envoyé par la deuxième unité d'envoi (648) du serveur d'application (64) ; et
- une deuxième unité d'envoi (614) pour envoyer la demande de partage de vidéo au serveur d'application (64) par le biais du réseau mobile ;
- le serveur média (62) étant utilisé pour recevoir le fichier vidéo transféré par le serveur d'application (64), stocker le fichier vidéo à l'adresse de stockage, et envoyer un flux vidéo du fichier vidéo au terminal appelé par le biais de la liaison vidéo établie.

5. Système de partage d'une vidéo entre des terminaux mobiles selon la revendication 4, **caractérisé en ce que**
le serveur d'application (64) est utilisé en outre pour traiter le service de partage de vidéo, le serveur d'application (64) comprenant en outre : une unité de connexion média (6412) pour, après l'envoi d'une demande d'envoi du flux vidéo au serveur média (62), recevoir une adresse IP, par le biais de laquelle le serveur média (62) envoie le flux vidéo, renvoyée par le serveur média (62), et établir une liaison vidéo avec une interface IP, par le biais de laquelle le serveur média (62) envoie le flux vidéo, en fonction de l'adresse IP renvoyée par le serveur média (62) ; et
une unité de connexion de terminal (6413) pour envoyer l'adresse IP renvoyée par le serveur média (62), par le biais de laquelle le serveur média (62) envoie le flux vidéo, au terminal appelé (63) par le biais du réseau mobile, et établir une liaison vidéo avec le terminal appelé (63).

6. Système de partage d'une vidéo entre des terminaux mobiles selon la revendication 5, **caractérisé en ce que**
le serveur d'application (64) comprend en outre : une troisième unité d'envoi (6414) pour envoyer une commande de reproduction au serveur média (62), dans lequel la commande de reproduction comprend l'adresse de stockage du fichier vidéo ; et une quatrième unité de réception (6415) pour recevoir un message de réponse renvoyé par le serveur média (62) ;
le serveur média (62) est utilisé en outre pour, quand il reçoit la commande de reproduction envoyée par le serveur d'application (64), renvoyer le message de réponse au serveur d'application (64) et envoyer le flux vidéo du fichier vidéo au terminal appelé (63) par le biais de la liaison vidéo entre le terminal appelé (63) et l'interface IP, par le biais de laquelle le serveur média (62) envoie le flux vidéo, en fonction de l'adresse de stockage du flux vidéo.
